# DEMANDE DE BREVET EUROPEEN

(11) **EP 0 849 885 A1**
(43) Date de publication de la demande: **24.06.1998**
(21) Numéro de dépôt: 97402793.0
(22) Date de dépôt: 20.11.1997
(51) Int. Cl.: H04B 1/20, H04N 7/173

(54) **Télécommande reconfigurable pour contrôle d'accès aux fonctions d'un récepteur audiovisuel**

(30) Priorité: 17.12.1996 FR 9615495
(71) Demandeur: Locatel, 75008 Paris (FR)
(72) Inventeur: Poiré, Gérard, 78180 Montigny Le Bretonneux (FR); Pin, Didier, 60790 Valdampierre (FR)
(74) Mandataire: Buffière, Michelle

(57) **Abrégé**

Télécommande comportant des moyens de contrôle d'accès (22) engendrant des signaux de sélection de fonction (24) en réponse à des commandes de sélection de fonction (21) et sous la dépendance d'informations de contrôle d'accès, caractérisée en ce que lesdites informations de contrôle d'accès sont inscrites dans des moyens de mémorisation installés à demeure dans ladite télécommande.

## Description

La présente invention concerne un système de contrôle d'accès aux fonctions d'un récepteur audiovisuel. Ce récepteur (ou poste) audiovisuel peut indifféremment être un poste de télévision, un poste de radio ou tout autre type d'appareil susceptible d'être piloté par une télécommande.

Les fonctions, quant à elles, peuvent être des sélections de programmes audiovisuels, des réglages particuliers du récepteur (volume, balance, contraste, luminosité... ) ou tout autre service offert par le récepteur (mise en veille, arrêt...).

Il existe de nombreux systèmes de ce genre. On peut citer, par exemple, certains systèmes de télévision dans lesquels chaque récepteur comporte un appareil dans lequel l'utilisateur doit introduire des pièces pour mettre le récepteur en fonctionnement. Dans un tel système le contrôle n'est pas très fin puisqu'on ne peut pas contrôler les fonctions du récepteur de façon indépendante les unes des autres.

D'autres systèmes plus complexes mettent en oeuvre un réseau de télédistribution et une unité de commande connectée au réseau qui permet de déterminer les droits d'accès d'un récepteur particulier du réseau aux différents programmes véhiculés par ce réseau. Un tel système est par exemple décrit dans la demande de brevet français n° 8910150.

Une autre solution consiste à adjoindre à chaque récepteur un lecteur de carte à puce ou de carte magnétique, ladite carte contenant des informations sur les fonctions accessibles ou non à l'utilisateur auquel elle a été attribuée. Le récepteur comporte un moyen de contrôle d'accès qui utilise les informations de contrôle d'accès contenues dans la carte pour accepter ou non les commandes de sélection de fonction qui lui sont soumises par des moyens de commande.

Un autre dispositif consiste à adjoindre le lecteur de carte non plus au récepteur mais à une télécommande. Le récepteur est alors démuni de moyens de commande de sélection de fonction et le contrôle d'accès est fait par la télécommande en fonction des informations contenues dans la carte. Chaque commande de sélection de fonction est traitée par le moyen de contrôle d'accès et donne lieu ou non à une sélection de fonction en fonction des informations de contrôle d'accès contenues dans la carte.

Ces systèmes ont cependant comme inconvénient d'être coûteux à mettre en oeuvre puisqu'ils impliquent la réalisation de matériel spécifique complexe ou l'utilisation de lecteurs de carte à puce ou magnétique.

Le but de la présente invention est de proposer un système de contrôle d'accès qui soit à la fois peu coûteux et facile d'emploi.

Pour cela, le système proposé par l'invention est une télécommande qui comporte des moyens de contrôle d'accès engendrant des signaux de sélection de fonction en réponse à des commandes de sélection de fonction et sous la dépendance d'informations de contrôle d'accès, et que se caractérise en ce que ces informations de contrôle d'accès sont inscrites dans des moyens de mémorisation installés à demeure dans la télécommande.

Préférentiellement, cette télécommande comporte deux modes de fonctionnement :
- un mode de fonctionnement normal, durant lequel une commande de sélection donne lieu ou pas à une sélection en fonction des moyens de contrôle,
- un mode de configuration durant lequel l'appui sur une touche modifie les informations de contrôle d'accès.

Elle dispose donc d'un moyen de changement de mode lui permettant de passer du mode de fonctionnement normal au mode de configuration et *vice-versa.*

Les caractéristiques et avantages de la présente invention apparaîtront de façon plus claire dans la description qui va suivre en liaison avec les figures évoquées ci-dessous :

La figure 1 montre une vue schématique du boîtier de la télécommande dans laquelle est mise en oeuvre l'invention.

La figure 2 représente de façon très schématique l'architecture de base du système selon l'invention.

La figure 3 détaille une mise en oeuvre particulière et préférentielle du moyen de mémorisation contenu par la télécommande selon l'invention.

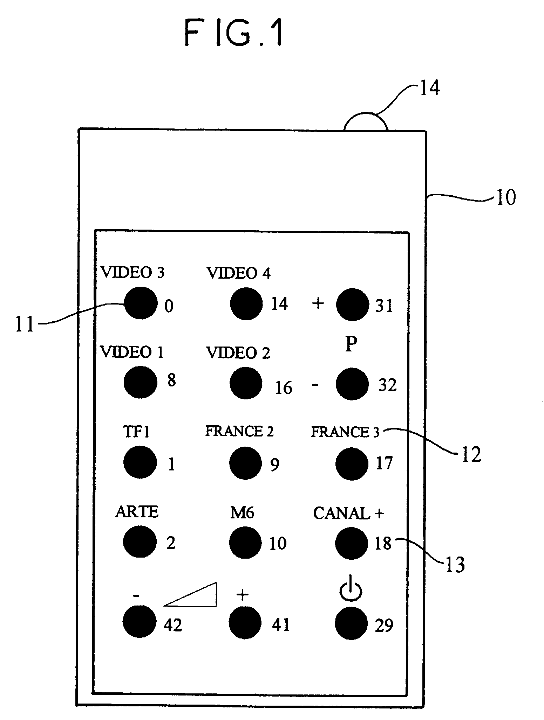

La figure 1 représente une vue d'un boîtier de la télécommande 10 dans laquelle est mise en oeuvre la présente invention. De façon classique les moyens de commande de sélection sont constitués de touches 11. Chaque touche est associée à une fonction 12 qui est le plus souvent inscrite sur le boîtier et à un identifiant 13 destiné au traitement interne à la télécommande et à la transmission vers le récepteur audiovisuel. Cet identifiant est ensuite interprété par le récepteur, notamment par un synthétiseur de fréquence, d'une façon connue en soi.

Les identifiants indiqués sur la figure 1 sont purement indicatifs puisqu'ils dépendent du type de récepteur audiovisuel et de son constructeur. Ils ne sont donnés que pour la clarté de l'exposé de l'invention.

La télécommande dispose en outre de moyens de communication 14 lui permettant d'émettre des signaux de sélections de fonction à destination d'un récepteur.

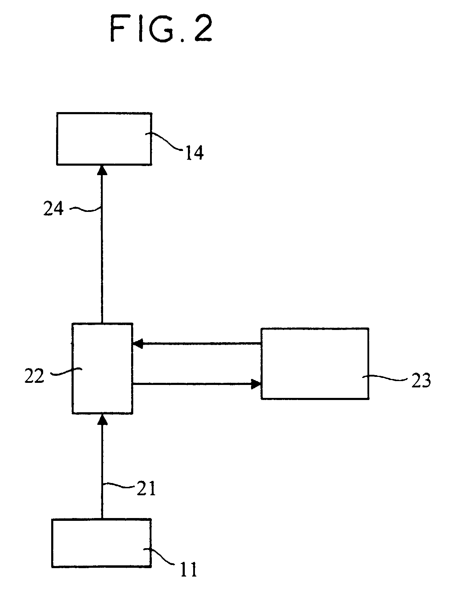

Sur la figure 2, la référence 21 représente une commande de sélection de fonction. Classiquement, cette commande est émise lors d'un appui sur une touche 11 de la télécommande.

La référence 22 représente un moyen de contrôle d'accès aux programmes. Ce moyen de contrôle peut être un micro-contrôleur de type classique en soi, programmé de façon particulière. Pour chaque commande de sélection de fonction 21, un dialogue s'établit entre le moyen de contrôle d'accès 22 et le moyen de mémorisation 23 afin de déterminer en fonction des informations de contrôle d'accès contenues dans le moyen de mémorisation 23 si la commande de sélection de fonction 21 doit être autorisée ou non.

Si la réponse à ce test est oui, le moyen de contrôle d'accès 22 émet une sélection de fonction 24 à destination du moyen de communication 14.

Si la réponse est non, le moyen de contrôle d'accès n'émet rien, de sorte que la commande de sélection de fonction reste sans effet pour l'utilisateur.

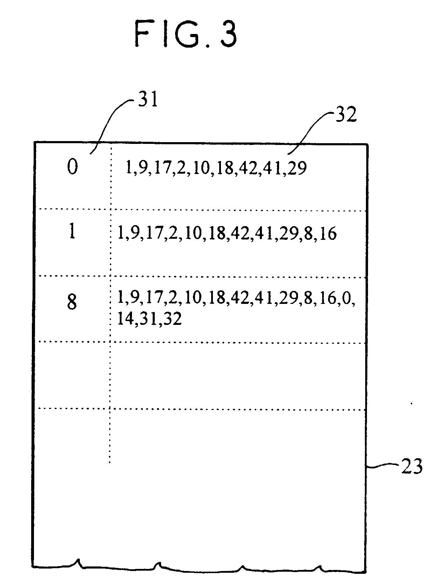

La figure 3 illustre une mise en oeuvre préférentielle de l'invention.

Pendant le mode de configuration, toutes ou partie des touches 11 de la télécommande ont une fonction de configuration de la télécommande. C'est-à-dire que l'appui sur une de ces touches modifie les informations de contrôle d'accès contenues dans le moyen de mémorisation 23. Ce moyen 23 associe à chacune de ces touches 11 une liste de touches valides, c'est-à-dire dont l'appui engendre une sélection de fonction 24.

Ainsi, à chaque moyen de configuration est associé un « bouquet » de fonctions autorisées, les autres étant implicitement interdites.

Sur la figure 3 qui représente une implémentation particulière des informations de contrôle d'accès dans le moyen de mémorisation 23, la référence 31 représente une « colonne » de cette mémoire 23 qui contient les identifiants des touches de configuration. La colonne 32 contient la liste des identifiants correspondants aux fonctions « autorisées ».

Ainsi, l'appui sur la touche « VIDEO 3 » (à laquelle correspond l'identifiant 0) pendant le mode de configuration de la télécommande autorisera les fonctions « TF1 » (identifiant 1), « FRANCE 2 » (9), « FRANCE 3 » (17), « ARTE» (2), «M6» (10) «CANAL +» (18), « Volume - » (42), « Volume +» (41) et « Mise en veille» (29). L'appui sur la touche « TF1 » autorisera en plus des fonctions susmentionnées les fonctions « VIDEO 1 » (identifiant 8) et « VIDEO 2 » (16) qui peuvent correspondre à des programmes spéciaux véhiculés par le réseau de télédistribution auquel est raccordé le récepteur audiovisuel.

L'identifiant de la touche appuyée pendant le mode de configuration (ou de la dernière touche appuyée) est mémorisé dans une mémoire de configuration courante qui peut être la même que le moyen de mémorisation 23.

Pendant le mode de fonctionnement normal, à chaque appui sur une touche 11 de la télécommande, une commande 21 de sélection de fonction est émise vers le moyen de contrôle d'accès 22. Celui-ci vérifie dans le moyen de mémorisation 23 si l'identifiant correspondant fait partie de la liste correspondant à la configuration en cours.

Si oui, une sélection de fonction 24 est émise à destination du récepteur via le moyen de communication 14.

Sinon, rien n'est émis.

Bien évidemment, il est possible de proposer une variante de l'invention dans laquelle les touches de configuration sont distinctes des moyens 21 de commande de sélection de fonction. Un tel système ainsi que d'autres variantes accessibles à l'homme du métier doivent être compris comme faisant partie de la présente invention.

Le moyen de changement de mode peut être réalisé de différentes façons.

Par exemple, il peut s'agir de l'association d'un générateur de champ électromagnétique et d'un relais de type ILS permettant de détecter la présence de ce champ.

Ainsi, pour passer en mode configuration, l'utilisateur peut poser la télécommande sur un socle contenant un générateur de champ électromagnétique.

En le retirant, la télécommande bascule d'elle-même en mode de fonctionnement normal.

Il est clair que seule une personne responsable (le maître d'hôtel par exemple) doit pouvoir avoir accès au moyen de changement de mode.

## Revendications

1. Télécommande comportant des moyens de contrôle d'accès (22) engendrant des signaux de sélection de fonction (24) en réponse à des commandes de sélection de fonction (21) et sous la dépendance d'informations de contrôle d'accès, **caractérisée en ce que** lesdites informations de contrôle d'accès sont inscrites dans des moyens de mémorisation installés à demeure dans ladite télécommande.

2. Télécommande selon la revendication 1 **caractérisée en ce que** ladite télécommande possède
• un moyen de changement de mode permettant de basculer d'un mode de fonctionnement normal à un mode de configuration, et,
• des moyens de configuration actifs uniquement pendant ledit mode de configuration et permettant la modification desdites informations de contrôle d'accès dans lesdits moyens de mémorisation.

3. Télécommande selon la revendication 2 **caractérisée en ce que** lesdits moyens de configuration sont des touches (11) de ladite télécommande, utilisables par ailleurs ans ledit fonctionnement normal.

4. Télécommande selon la revendication 2 ou 3 **caractérisée en ce que** lesdites informations d'accès associent des identifiants (13) des moyens de configuration à des listes d'identifiants (13) de moyens (21) de commandes de sélection de fonction.

5. Télécommande selon l'une des revendications 2 à 4 **caractérisée en ce que** ledit moyen de changement de mode comprend un relais ILS destiné à être actionné par un générateur de champ électromagnétique externe à ladite télécommande.
